# EUROPÄISCHE PATENTSCHRIFT

(11) **EP 3 762 186 B1**
(45) Veröffentlichungstag und Bekanntmachung des Hinweises auf die Patenterteilung: **26.03.2025**
(21) Anmeldenummer: 19709434.5
(22) Anmeldetag: 04.03.2019
(51) Int. Cl.: B25J 9/16, G05B 23/02

(54) **VORAUSSCHAUENDE BEURTEILUNG VON ROBOTERN**
PREDICTIVE ASSESSMENT OF ROBOTS
ÉVALUATION PRÉVISIONNELLE DE ROBOTS

(30) Priorität: 05.03.2018 DE 102018203234
(43) Veröffentlichungstag der Anmeldung: 13.01.2021
(73) Patentinhaber: KUKA Deutschland GmbH, 86165 Augsburg (DE)
(72) Erfinder: BOCK, Jürgen, 86157 Augsburg (DE); KASPAR, Manuel, 86343 Königsbrunn (DE)
(74) Vertreter: Wallinger Ricker Schlotter Tostmann
(86) Internationale Anmeldenummer: PCT/EP2019/055321
(87) Internationale Veröffentlichungsnummer: WO 2019/170604

(56) Entgegenhaltungen:
- DE-A1- 102016 008 987
- DE-A1- 102016 008 987
- DE-A1- 102017 003 165
- DE-A1- 102017 003 165
- DE-A1- 102017 108 169
- DE-A1- 102017 108 169

## Beschreibung

Die vorliegende Erfindung betrifft ein Verfahren und System zur vorausschauenden Beurteilung wenigstens eines Roboters.

Die DE 10 2017 003 165 A1 betrifft eine maschinelle Lernvorrichtung, welche die Fehlervorhersage einer Hauptwelle einer Werkzeugmaschine oder eines die Hauptwelle antreibenden Motors lernt, umfassend eine Zustandsbeobachtungseinheit , die eine Zustandsvariable beobachtet, die von einer den Motor steuernden Motorsteuerung ausgegebene Daten oder/und von einem einen Zustand des Motors ermittelnden Sensor ausgegebene Daten oder/und von einer einen Zustand der Hauptwelle oder des Motors messenden Messvorrichtung ausgegebene Daten umfasst, eine die Ermittlungsdaten zum Ermitteln, ob ein Fehler an der Hauptwelle oder am Motor aufgetreten ist, oder eines Fehlergrads erfassende Ermittlungsdaten-Erfassungseinheit und eine die Fehlervorhersage der Hauptwelle oder des Motors entsprechend einem auf der Basis einer Kombination der Zustandsvariable und der Ermittlungsdaten erzeugten Datensatz lernende Lerneinheit.

Die DE 10 2017 108 169 A1 betrifft ein Produktionssystem, das eine Zellensteuervorrichtung umfasst, die an eine Maschinensteuervorrichtung und eine Prüfungssteuervorrichtung angeschlossen ist, wobei die Zellensteuervorrichtung eine Speichereinheit umfasst, die Daten hinsichtlich eines Zustands der Herstellungsmaschine, Daten hinsichtlich eines Zustands der Umgebung und Daten hinsichtlich eines Prüfergebnisses speichert, die Zellensteuereinheit eine Wechselbeziehungsanalyseeinheit umfasst, die bei Auftreten einer Abweichung im Prüfergebnis auf Basis einer Wechselwirkung zwischen dem Prüfergebnisund den Daten hinsichtlich des Zustands der Herstellungsmaschine und den Daten hinsichtlich des Zustand der Umgebung eine Variable wählt, die mit der Abweichung in Zusammenhang steht, und eine Bestimmungswertfestlegeeinheit, die einen Bestimmungswert der Variablen, die mit der Abweichungin Zusammenhang steht, festlegt

Die DE 10 2016 008 987 A1 betrifft ein Fehlervorhersagesystem, das eine Maschinenlernvorrichtung einschließt, die Bedingungen in Zusammenhang mit einem Fehler einer Industriemaschine lernt.

Aufgabe der vorliegenden Erfindung ist es, den Betrieb von Robotern zu verbessern. Diese Aufgabe wird durch ein Verfahren mit den Merkmalen des Anspruchs 1 gelöst.

Ansprüche 8 und 9 stellen ein System bzw. Computerprogrammprodukt zur Durchführung eines hier beschriebenen Verfahrens unter Schutz. Die Unteransprüche betreffen vorteilhafte Weiterbildungen.

Nach einer Ausführung der vorliegenden Erfindung umfasst ein Verfahren zur vorausschauenden Beurteilung eines oder mehrerer Ziel-Roboter die Schritte:
- Ermitteln von anomalen Zustandswerten des bzw. der Ziel-Roboter und/oder eines oder mehrerer, insbesondere typgleicher, weiteren Roboter;
- Klassifizieren der anomalen Zustandswerte in eine von mehreren Klassen;
- überwachtes maschinelles Lernen ("supervised (machine) learning") einer Zuordnung zwischen Zustandswerten und den Klassen auf Basis bzw. in Abhängigkeit von den klassifizierten anomalen Zustandswerten;
- Erfassen von Zustandswerten des bzw. der Ziel-Roboter; und
- Prognostizieren eines Zustands des bzw. der Ziel-Roboter auf Basis bzw. in Abhängigkeit von diesen erfassten Zustandswerten und der maschinell gelernten Zuordnung.

Durch das anfängliche Ermitteln von anomalen Zustandswerten und deren Klassifizieren bzw. Labeln in Klassen kann eine Zuordnung zwischen Zustandswerten und den Klassen vorteilhaft überwacht maschinell gelernt und anschließend zum Prognostizieren eines zukünftigen Zustands des bzw. der Ziel-Roboter genutzt werden. Insbesondere können durch das Ermitteln von anomalen Zustandswerten gezielt zunächst Zustandswerte, die auf Fehler des bzw. der Roboter hinweisen bzw. aus solchen Fehlern resultieren, ermittelt und so das maschinelle Lernen der Zuordnung verbessert werden, das einerseits bessere Prognosen als eine reine Anomaliedetektion liefern kann, andererseits regelmäßig eine große Datenbasis unterschiedlicher Klassen benötigt.

Dabei werden in einer Ausführung anomale Zustandswerte des bzw. der Ziel-Roboter selber ermittelt. Diese kann in einer Ausführung eine roboterspezifische Zuordnung zwischen Zustandswerten und den Klassen ermöglichen und so die Prognose verbessern.

Zusätzlich oder alternativ werden in einer Ausführung anomale Zustandswerte des bzw. der, insbesondere typgleichen, weiteren Roboter ermittelt. Hierdurch kann in einer Ausführung die Datenbasis vergrößert und/oder wenigstens teilweise bereits vor Inbetriebnahme des bzw. der Zielroboter generiert werden.

In einer Ausführung kann eine vorausschauende Beurteilung im Sinne der vorliegenden Erfindung eine vorausschauende Überwachung, insbesondere eine Prognose bzw. vorausschauende Diagnose, in einer Ausführung eine vorausschauende Fehlererkennung umfassen, insbesondere sein.

In einer Ausführung werden nicht als anomal ermittelte Zustandswerte der Zustandswertemenge bzw. Datenbasis, aus der die anomalen Zustandswerte ermittelt werden, wenigstens teilweise in eine zusätzliche Klasse klassifiziert. Mit anderen Worten können die mehreren Klassen auch eine Klasse enthalten, in die keine (als) anomal( ermittelt)en Zustandswerte, sondern nur (als) normal( ermittelt)e bzw. nicht (als) anomal( ermittelt)e Zustandswerte klassifiziert werden. Hierdurch kann in einer Ausführung das anschließende bzw. auf dieser Klassifizierung basierende überwachte maschinelle Lernen verbessert werden.

In einer Ausführung können die (ermittelten) anomalen Zustandswerte und/oder die (zur Prognose) erfassten Zustandswerte (jeweils) Zeitverläufe ("traces") von, insbesondere elektrischen, thermischen, kinematischen und/oder dynamischen, ein oder mehrdimensionalen Zustandsgrößen des bzw. der jeweiligen Roboter aufweisen, insbesondere sein, in einer Ausführung Motorströme und/oder -spannungen von Antriebsmotoren des bzw. der jeweiligen Roboter, Bauteil- und/oder Fluid-, insbesondere Motor-, Getriebe- und/oder ähnliche Temperaturen des bzw. der jeweiligen Roboter, Achskoordinaten, -geschwindigkeiten und/oder höhere Zeitableitungen, Kräfte und/oder (Dreh)Momente, insbesondere an Achsen bzw. Antrieben des bzw. der jeweiligen Roboter, und/oder Regel-, insbesondere Schleppfehler. Hierdurch kann in einer Ausführung die Klassifizierung verbessert werden.

Zusätzlich oder alternativ können die (ermittelten) anomalen Zustandswerte und/oder die (zur Prognose) erfassten Zustandswerte (jeweils) statistische Kennwerte solcher Zeitverläufe aufweisen, insbesondere sein, in einer Ausführung Maximal-, Minimal-, Durchschnitts- bzw. Mittelwerte oder dergleichen. Hierdurch kann in einer Ausführung die Klassifizierung vereinfacht werden.

In einer Weiterbildung können die Zeitverläufe Zeitverläufe bei gleichartigen, insbesondere identisch vorgegebenen, Referenzfahrten aufweisen, insbesondere sein, in einer Ausführung Zeitverläufe, die bei gleichartigen Referenzfahrten an verschiedenen Tagen, insbesondere in verschiedenen Wochen, aufgenommen werden bzw. worden sind. Bei gleichartigen Referenzfahrten können Fehler des Roboters in einer Ausführung deutlicher erkannt werden.

Zusätzlich oder alternativ können in einer Weiterbildung die Zeitverläufe Zeitverläufe im regulären Arbeitsbetrieb des bzw. der Ziel- bzw. weiteren Roboter aufweisen, insbesondere sein, in einer Ausführung Zeitverläufe, die im regulären Arbeitsbetrieb an verschiedenen Tagen, insbesondere in verschiedenen Wochen, aufgenommen werden bzw. worden sind. Durch die Verwendung von Zeitverläufen, die im regulären Arbeitsbetrieb aufgenommen werden, können in einer Ausführung Anomalien frühzeitig und/oder ohne Störung des regulären Arbeitsbetriebs ermittelt werden. In einer Ausführung können hierfür die Zeitverläufe von einer oder mehreren Robotersteuerungen zum Hersteller des bzw. der Ziel-Roboter übertragen werden, insbesondere mittels Internet oder dergleichen. Ein regulärer Arbeitsbetrieb eines Roboters umfasst in einer Ausführung die Handhabung wenigstens eines Werkstücks und/oder -zeugs durch den Roboter, insbesondere den Transport und/oder die Bearbeitung eines Werkstücks.

In einer Ausführung werden die anomalen Zustandswerte mittels eines Anomaliedetektionsalgorithmus ("anomaly detection", "outlier detection"), insbesondere mittels unüberwachtem maschinellen Lernen ("unsupervised (machine) learning") ermittelt. Vorteilhafte Anomaliedetektionsalgorithmen sind insbesondere Autoregressive Integrated Moving Average (ARIMA), time series fare out, break-out detection, Autoencoder oder Energy-based methods. Hierdurch können die anomalen Zustandswerte besonders vorteilhaft ermittelt werden.

Das überwachte maschinelle Lernen kann besonders vorteilhaft ein sogenanntes tiefgehendes Lernen ("Deep Learning") sein und/oder durch bzw. mithilfe eines künstlichen neuronalen Netzes durchgeführt werden. Gleichermaßen kann es vorteilhaft mithilfe sogenannter Support Vector Machines, Decision-Trees bzw. -Forests oder dergleichen durchgeführt werden.

In einer Ausführung umfasst das Ermitteln von anomalen Zustandswerten die Schritte:
- Ermitteln von, insbesondere abgeschlossenen oder einseitig offenen, Zeitintervallen anomaler Zustandswerte des bzw. der Ziel-Roboter und/oder weiteren Roboter auf Basis bzw. in Abhängigkeit von gleichartigen Referenzfahrten; und
- Ermitteln von anomalen Zeitverläufen dieses bzw. dieser Roboter im regulären Arbeitsbetrieb auf Basis bzw. in Abhängigkeit von diesen, insbesondere innerhalb dieser, Zeitintervalle(n).

Durch die anfängliche Verwendung von gleichartigen Referenzfahrten zur Ermittlung von Zeitintervallen, in denen anomale Zustandswerte vorliegen, können diese Zeitintervalle vorteilhaft, insbesondere einfach, zuverlässig und/oder schnell, ermittelt werden. Durch die anschließende Verwendung von Zeitverläufen des regulären Arbeitsbetriebs können dann darin Muster identifiziert werden, die in den Zeiträumen auftreten, in denen der bzw. die Roboter den bzw. die Fehler aufweisen, die zu den anomalen Zustandswerten bei den Referenzfahrten geführt haben. Hierdurch können einerseits die Anomalien bzw. Fehler einfach, zuverlässig und/oder schnell, ermittelt und andererseits dann auch im regulären Arbeitsbetrieb entsprechende Muster erkannt werden.

In einer Ausführung wird auf Basis ermittelter anomaler Zustandswerte ein Ermitteln weiterer anomaler Zustandswerte instruiert, die in eine von den Klassen klassifiziert und beim überwachten maschinellen Lernen berücksichtigt werden. Somit können in einer Ausführung bei Ermitteln anomaler Zustandswerte eine oder mehrere, insbesondere weitere, Referenzfahrten getriggert werden. Hierdurch kann bei Fehlern bzw. Anomalien eine breitere und/oder zuverlässigere Datenbasis genutzt werden.

In einer Ausführung werden die anomalen Zustandswerte auf Basis bzw. in Abhängigkeit von einer Benutzereingabe und/oder auf Basis bzw. in Abhängigkeit von einer Inspektion des bzw. der Ziel- bzw. weiteren Roboter, klassifiziert, insbesondere auf Basis bzw. in Abhängigkeit von einer Inspektion durch Personal bzw. des Ergebnisses einer solchen Inspektion bzw. einer entsprechenden Benutzereingabe. Somit werden in einer Ausführung die anomalen Zustandswerte manuell gelabelt bzw. klassifiziert. Hierdurch können in einer Ausführung die anomalen Zustandswerte bei einem überwachten maschinellen Lernen vorteilhaft genutzt werden.

In einer Weiterbildung wird diese Inspektion auf Basis ermittelter anomaler Zustandswerte instruiert, insbesondere durch Ausgabe einer entsprechenden Meldung bzw. Anweisung an Personal. Somit wird in einer Ausführung gezielt infolge ermittelter anomaler Zustandswerte eine Inspektion des bzw. der Roboter angestoßen und die ermittelten anomalen Zustandswerte anschließend auf Basis (des Ergebnisses) dieser Inspektion bzw. einer entsprechenden Benutzereingabe klassifiziert bzw. gelabelt.

In einer Ausführung wird auf Basis bzw. in Abhängigkeit von dem prognostizierten Zustand des bzw. der Ziel-Roboter ein Wartungsintervall und/oder eine Wartung hierfür angepasst, insbesondere ein Wartungsintervall vorgegeben bzw. instruiert oder ein vorgegebenes Wartungsintervall verkürzt oder verlängert und/oder eine Wartung bestimmter der Ziel-Roboter bzw. eine Wartung bestimmter Teile des bzw. der ZielRoboter vorgegeben bzw. instruiert. Zusätzlich oder alternativ kann auf Basis bzw. in Abhängigkeit von dem prognostizierten Zustand des bzw. der Ziel-Roboter auch eine Restlebensdauer des bzw. der Ziel-Roboter bzw. bestimmter Teile hiervon prognostiziert werden. Somit wird in einer Ausführung eine sogenannte Predictive Maintenance des bzw. der Ziel-Roboter durchgeführt.

In einer Ausführung kann ein prognostizierter Zustand des bzw. der Ziel-Roboter(s) dessen bzw. deren Zugehörigkeit zu einer oder mehreren der Klassen, in die die anomalen Zustandswerte klassifiziert worden sind, insbesondere einschließlich der zusätzlichen Klasse, die einem fehlerfreien Roboter entsprechen kann, bzw. die Wahrscheinlichkeit einer solchen Zugehörigkeit umfassen, insbesondere sein, insbesondere die (jeweilige) Wahrscheinlichkeit der Zugehörigkeit zu dieser bzw. diesen Klassen. In einer Ausführung ist wenigstens eine dieser Klassen (jeweils) einer Funktions- bzw. Baugruppe, insbesondere einem Bauteil oder einer Funktion, des bzw. der Ziel-Roboter zugeordnet, beispielsweise jedem Antrieb oder verschiedenen Antriebsgruppen jeweils eine Klasse oder dergleichen. Entsprechend umfassen in einer Ausführung die Klassen wenigstens zwei, vorzugsweise mehr als zwei, Klassen. Hierdurch kann die Prognose, insbesondere Predictive Maintenance, verbessert, insbesondere präzisiert, werden.

Nach einer Ausführung der vorliegenden Erfindung ist ein System, insbesondere hard- und/oder software-, insbesondere programmtechnisch, zur Durchführung eines hier beschriebenen Verfahrens eingerichtet und/oder weist auf:
- Mittel zum Ermitteln von anomalen Zustandswerten des bzw. der Ziel-Roboter(s) und/oder eines oder mehrerer weiteren Roboter(s);
- Mittel zum Klassifizieren der anomalen Zustandswerte in eine von mehreren Klassen;
- Mittel zum überwachten maschinellen Lernen einer Zuordnung zwischen Zustandswerten und den Klassen auf Basis bzw. in Abhängigkeit von den klassifizierten anomalen Zustandswerten;
- Mittel zum Erfassen von Zustandswerten des bzw. der Ziel-Roboter; und
- Mittel zum Prognostizieren eines Zustands des bzw. der Ziel-Roboter auf Basis bzw. in Abhängigkeit von diesen erfassten Zustandswerten und der maschinell gelernten Zuordnung.

In einer Ausführung weist das System bzw. sein(e) Mittel auf:
- Mittel zum Ermitteln von Zeitintervallen anomaler Zustandswerte des wenigstens einen Ziel- und/oder weiteren Roboters auf Basis gleichartiger Referenzfahrten und Mittel zum Ermitteln von anomalen Zeitverläufen des wenigstens einen Ziel- bzw. weiteren Roboters im regulären Arbeitsbetrieb auf Basis dieser Zeitintervalle; und/oder
- Mittel zum Instruieren eines Ermittelns weiterer anomaler Zustandswerte, die in eine von den Klassen klassifiziert und beim überwachten maschinellen Lernen berücksichtigt werden, auf Basis ermittelter anomaler Zustandswerte; und/oder
- Mittel zum Klassifizieren der anomalen Zustandswerte auf Basis einer Benutzereingabe und/oder Inspektion des wenigstens einen Ziel- bzw. weiteren Roboters, insbesondere durch Personal; und/oder
- Mittel zum Instruieren der Inspektion auf Basis ermittelter anomaler Zustandswerte; und/oder
- Mittel zum Anpassen und/oder Instruieren eines Wartungsintervalls und/oder einer Wartung auf Basis des prognostizierten Zustands des wenigstens einen Ziel-Roboters und/oder zum Prognostizieren einer Restlebensdauer auf Basis des prognostizierten Zustands des wenigstens einen Ziel-Roboters.

Ein Mittel im Sinne der vorliegenden Erfindung kann hard- und/oder softwaretechnisch ausgebildet sein, insbesondere eine, vorzugsweise mit einem Speicher- und/oder Bussystem daten- bzw. signalverbundene, insbesondere digitale, Verarbeitungs-, insbesondere Mikroprozessoreinheit (CPU) und/oder ein oder mehrere Programme oder Programmmodule aufweisen. Die CPU kann dazu ausgebildet sein, Befehle, die als ein in einem Speichersystem abgelegtes Programm implementiert sind, abzuarbeiten, Eingangssignale von einem Datenbus zu erfassen und/oder Ausgangssignale an einen Datenbus abzugeben. Bei der CPU kann es sich insbesondere um eine Recheneinheit einer Grafikkarte ("GPU") handeln. Ein Speichersystem kann ein oder mehrere, insbesondere verschiedene, Speichermedien, insbesondere optische, magnetische, Festkörper- und/oder andere nicht-flüchtige Medien aufweisen. Das Programm kann derart beschaffen sein, dass es die hier beschriebenen Verfahren verkörpert bzw. auszuführen imstande ist, sodass die CPU die Schritte solcher Verfahren ausführen kann und damit insbesondere den bzw. die Ziel-Roboter vorausschauend überwachen kann. Ein Computerprogrammprodukt kann in einer Ausführung ein, insbesondere nicht-flüchtiges, Speichermedium zum Speichern eines Programms bzw. mit einem darauf gespeicherten Programm aufweisen, insbesondere sein, wobei ein Ausführen dieses Programms ein System bzw. eine Steuerung, insbesondere einen Computer, dazu veranlasst, ein hier beschriebenes Verfahren bzw. einen oder mehrere seiner Schritte auszuführen.

In einer Ausführung werden ein oder mehrere, insbesondere alle, Schritte des Verfahrens vollständig oder teilweise automatisiert durchgeführt, insbesondere durch das System bzw. sein(e) Mittel.

In einer Ausführung umfasst das System den bzw. die Ziel- und/oder weiteren Roboter.

In einer Ausführung wird das Verfahrens vollständig oder teilweise durch eine Robotersteuerung zum Steuern des bzw. eines oder mehrerer der Roboter durchgeführt, in einer Weiterbildung durch dasselbe physische System und/oder logisch getrennt von dem Verfahren zum Steuern des bzw. der Roboter. In einer Ausführung wird das Verfahrens vollständig oder teilweise durch ein bzw. das von einer Robotersteuerung zum Steuern des bzw. eines oder mehrerer der Roboter separate(s) System durchgeführt.

Weitere Vorteile und Merkmale ergeben sich aus den Unteransprüchen und den Ausführungsbeispielen. Hierzu zeigt, teilweise schematisiert:
Fig. 1: ein System zur vorausschauenden Beurteilung eines Ziel-Roboters nach einer Ausführung der vorliegenden Erfindung; und
Fig. 2: ein Verfahren zur vorausschauenden Beurteilung des Ziel-Roboters nach einer Ausführung der vorliegenden Erfindung.

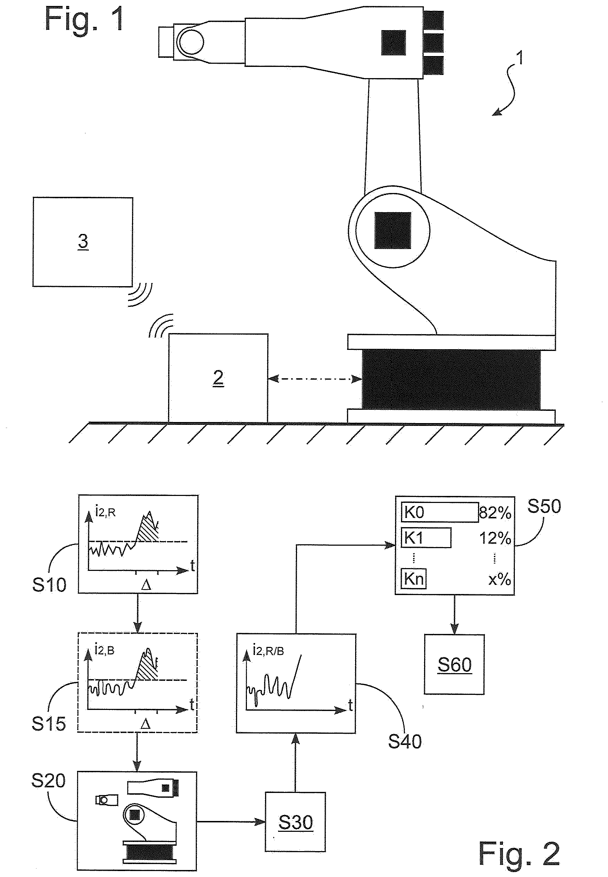

Fig. 1 zeigt ein System zur vorausschauenden Beurteilung eines durch eine Robotersteuerung 2 gesteuerten Ziel-Roboters 1 nach einer Ausführung der vorliegenden Erfindung mit einem Rechner 3, der mit der Robotersteuerung 2 kommuniziert und ein nachfolgend mit Bezug auf Fig. 2 erläutertes Verfahren zur vorausschauenden Beurteilung des Ziel-Roboters nach einer Ausführung der vorliegenden Erfindung durchführt bzw. hierzu eingerichtet ist. In einer nicht dargestellten Abwandlung kann das Verfahren nach Fig. 2 auch auf der Robotersteuerung 2 ablaufen.

In einem Schritt S10 werden in Zeitverläufen von Zustandsgrößen des Ziel-Roboters 1, die bei gleichartigen Referenzfahrten an mehreren Tagen aufgenommen wurden, oder statistischen Kennwerten dieser Zeitverläufe mithilfe eines Anomaliedetektionsalgorithmus anomale Zustandswerte des Ziel-Roboters 1 ermittelt.

Rein exemplarisch sind hier die Maximalwerte von Motorströmen einer zweiten Achse des Roboters 1 über der Zeit t aufgetragen, wobei jeder Datenpunkt einem Tag bzw. einer Referenzfahrt entspricht. Gleichermaßen können in nicht dargestellten Abwandlungen auch mehrdimensionale Zustandswerte, beispielsweise die Motorströme mehrerer, insbesondere aller, Achsen des Roboters 1 und/oder anstelle statistischer Kennwerte direkt aufgenommene Zeitverläufe (sogenannte "traces") verwendet werden.

Dabei wird ein Zeitintervall Δ anomaler Zustandswerte ermittelt, wie in Fig. 2 schraffiert angedeutet.

In einem Schritt S15 werden dann die Zeitverläufe bzw. statistischen Kennwerte des regulären Arbeitsbetriebs des Roboters 1 in diesen Zeitintervallen Δ als anomale Zustandswerte ermittelt.

Wird beispielsweise festgestellt, dass die Motorströme bzw. statistischen Kennwerte bei Referenzfahrten seit einem bestimmten Datum bis zum aktuellen Zeitpunkt anomal sind, so werden die Motorströme bzw. statistischen Kennwerte des regulären Arbeitsbetriebs in dem Zeitintervall seit diesem Datum als anomale Zustandswerte ermittelt.

In einer Abwandlung kann Schritt S15 auch entfallen, wie in Fig. 2 gestrichelt angedeutet. Mit anderen Worten können auch die entsprechenden Zeitverläufe bzw. statistischen Kennwerte der Referenzfahrten selber als anomale Zustandswerte ermittelt werden

In einem Schritt S20 wird der Ziel-Roboter durch Personal inspiziert. Diese Inspektion kann insbesondere durch das Ermitteln anomaler Zustandswerte angestoßen werden.

Auf Basis des Ergebnisses der Inspektion werden die zuvor ermittelten anomalen Zustandswerte in Schritt S20 in eine von mehreren Klassen klassifiziert bzw. gelabelt.

Stellt beispielsweise ein Techniker fest, dass der Antrieb der zweiten Achse einen Fehler aufweist, beispielsweise sein Getriebe abgenutzt ist oder dergleichen, können die entsprechenden anomalen Zustandswerte in eine Klasse "Fehler Antrieb Achse 2", "Fehler Getriebe Antrieb Achse 2"oder dergleichen klassifiziert werden.

In einem Schritt S30 lernt ein künstliches neuronales Netz eine Zuordnung zwischen Zustandswerten und den Klassen auf Basis der klassifizierten anomalen Zustandswerte. In Abwandlungen können auch andere Verfahren des überwachten maschinellen Lernens ("supervised (machine) learning") verwendet werden. Nicht als anomale Zustandswerte ermittelte, d.h. normale Zustandswerte können dabei einer zusätzlichen Klasse als fehlerfrei zugeordnet werden.

In einem Schritt S40 werden weitere Zustandswerte des Ziel-Roboters 1 erfasst, exemplarisch wiederum die Motorströme bzw. statistischen Kennwerte bei Referenzfahrten bzw. im regulären Arbeitsbetrieb.

In einem Schritt S50 wird dann auf Basis dieser erfassten Zustandswerte und der maschinell gelernten Zuordnung ein Zustand des Ziel-Roboters 1 prognostiziert, der die Wahrscheinlichkeiten der Zugehörigkeit zu einer der mehreren Klassen beschreibt, beispielsweise eine 82%ige Wahrscheinlichkeiten einer Zugehörigkeit zu einer Klasse K0, die einem fehlerfreien Roboter entspricht, eine 12%ige Wahrscheinlichkeiten einer Zugehörigkeit zu einer Klasse K1, die einem fehlerhaften Antrieb der zweiten Achse bzw. dessen Getriebe entspricht, und so weiter, wie in Fig. 2 angedeutet.

Überschreitet die Wahrscheinlichkeit einer Zugehörigkeit zu einer fehlerhaften Klasse einen vorgegebenen Grenzwert, so wird in Schritt S60 eine Inspektion des Roboters 1, insbesondere des entsprechend als wahrscheinlich fehlerhaft prognostizierten Bauteils, instruiert.

Obwohl in der vorhergehenden Beschreibung exemplarische Ausführungen erläutert wurden, sei darauf hingewiesen, dass eine Vielzahl von Abwandlungen möglich ist.

So wurde vorliegend die Zuordnung auf Basis anomaler Zustandswerte des zu überwachenden Ziel-Roboters 1 selber maschinell gelernt. In einer Abwandlung können hierzu zusätzlich oder alternativ auch anomale Zustandswerte weiterer Roboter (nicht dargestellt) verwendet werden.

Außerdem sei darauf hingewiesen, dass es sich bei den exemplarischen Ausführungen lediglich um Beispiele handelt, die den Schutzbereich, die Anwendungen und den Aufbau in keiner Weise einschränken sollen. Vielmehr wird dem Fachmann durch die vorausgehende Beschreibung ein Leitfaden für die Umsetzung von mindestens einer exemplarischen Ausführung gegeben, wobei diverse Änderungen, insbesondere in Hinblick auf die Funktion und Anordnung der beschriebenen Bestandteile, vorgenommen werden können, ohne den Schutzbereich zu verlassen, wie er sich aus den Ansprüchen ergibt.

### Bezugszeichenliste

- 1: Roboter
- 2: Robotersteuerung
- 3: Rechner

- K0,...,Kn: Klasse
- Δ: Zeitintervall

## Patentansprüche

1. Verfahren zur vorausschauenden Beurteilung wenigstens eines Ziel-Roboters (1), mit den Schritten:
- Ermitteln (S10; S15) von anomalen Zustandswerten des Ziel-Roboters und/oder wenigstens eines weiteren Roboters, wobei durch das Ermitteln von anomalen Zustandswerten gezielt zunächst Zustandswerte, die auf Fehler des wenigstens einen Ziel- und/oder weiteren Roboters hinweisen oder aus solchen Fehlern resultieren, ermittelt werden;
- Klassifizieren (S20) der anomalen Zustandswerte in eine von mehreren Klassen, wobei verschiedenen Antriebsgruppen jeweils eine Klasse zugeordnet ist;
- überwachtes maschinelles Lernen (S30) einer Zuordnung zwischen Zustandswerten und den Klassen auf Basis der klassifizierten anomalen Zustandswerte;
- Erfassen (S40) von Zustandswerten des Ziel-Roboters; und
- Prognostizieren (S50) eines Zustands des Ziel-Roboters auf Basis dieser erfassten Zustandswerte und der maschinell gelernten Zuordnung,
wobei
- die anomalen Zustandswerte mittels eines Anomaliedetektionsalgorithmus ermittelt werden; und
- die anomalen Zustandswerte auf Basis einer Benutzereingabe und auf Basis einer Inspektion des wenigstens einen Ziel- und/oder weiteren Roboters durch Personal in eine von den mehreren Klassen klassifiziert werden.

2. Verfahren nach Anspruch 1, **dadurch gekennzeichnet, dass** die anomalen und/oder erfassten Zustandswerte Zeitverläufe von, insbesondere elektrischen, thermischen, kinematischen und/oder dynamischen, ein- oder mehrdimensionalen Zustandsgrößen des wenigstens einen Ziel- bzw. weiteren Roboters und/oder statistische Kennwerte hiervon aufweisen.

3. Verfahren nach dem vorhergehenden Anspruch, **dadurch gekennzeichnet, dass** die Zeitverläufe Zeitverläufe bei gleichartigen Referenzfahrten und/oder im regulären Arbeitsbetrieb des wenigstens einen Ziel- bzw. weiteren Roboters aufweisen.

4. Verfahren nach einem der vorhergehenden Ansprüche, **dadurch gekennzeichnet, dass** das Ermitteln von anomalen Zustandswerten umfasst:
- Ermitteln (S10) von Zeitintervallen anomaler Zustandswerte des wenigstens einen Ziel- und/oder weiteren Roboters auf Basis gleichartiger Referenzfahrten; und
- Ermitteln (S15) von anomalen Zeitverläufen des wenigstens einen Ziel- bzw. weiteren Roboters im regulären Arbeitsbetrieb auf Basis dieser Zeitintervalle.

5. Verfahren nach einem der vorhergehenden Ansprüche, **dadurch gekennzeichnet, dass** auf Basis ermittelter anomaler Zustandswerte ein Ermitteln weiterer anomaler Zustandswerte instruiert wird, die in eine von den Klassen klassifiziert und beim überwachten maschinellen Lernen berücksichtigt werden.

6. Verfahren nach einem der vorhergehenden Ansprüche, **dadurch gekennzeichnet, dass** die Inspektion auf Basis ermittelter anomaler Zustandswerte instruiert wird.

7. Verfahren nach einem der vorhergehenden Ansprüche, **dadurch gekennzeichnet, dass** auf Basis des prognostizierten Zustands des wenigstens einen Ziel-Roboters ein Wartungsintervall und/oder eine Wartung angepasst und/oder instruiert (S60) und/oder eine Restlebensdauer prognostiziert wird.

8. System, das zur Durchführung eines Verfahrens nach einem der vorhergehenden Ansprüche eingerichtet ist und aufweist:
- Mittel zum Ermitteln von anomalen Zustandswerten des Ziel-Roboters und/oder wenigstens eines weiteren Roboters;
- Mittel zum Klassifizieren der anomalen Zustandswerte in eine von mehreren Klassen;
- Mittel zum überwachten maschinellen Lernen einer Zuordnung zwischen Zustandswerten und den Klassen auf Basis der klassifizierten anomalen Zustandswerte;
- Mittel zum Erfassen von Zustandswerten des Ziel-Roboters; und
- Mittel zum Prognostizieren eines Zustands des Ziel-Roboters auf Basis dieser erfassten Zustandswerte und der maschinell gelernten Zuordnung,
wobei die Mittel eine digitale Verarbeitungseinheit und ein oder mehrere Programme oder Programmmodule aufweisen.

9. Computerprogrammprodukt mit einem Programmcode, der auf einem von einem Computer lesbaren Medium gespeichert ist, zur Durchführung eines Verfahrens nach einem der vorhergehenden Ansprüche 1 bis 7.

## Claims

1. A method for the predictive assessment of at least one target robot (1), wherein the method comprises the steps of:
- determining (S10; S15) abnormal state values of the target robot and / or at least one further robot, wherein, at first, by determining abnormal state values, state values which indicate faults of the at least one target robot and / or of the at least one further robot or which result from such faults are determined in a targeted manner;
- classifying (S20) the abnormal state values into one of a plurality of classes,
wherein different drive groups are each assigned to a respective class;
- learning, by supervised machine learning (S30), an assignment between state values and the classes on the basis of the classified abnormal state values;
- detecting (S40) state values of the target robot; and
- predicting (S50) a state of the target robot on the basis of these detected state values and the assignment learned by machine learning,
wherein
- the abnormal state values are determined by means of an algorithm for detecting anomalies; and
- the abnormal state values are classified into one of the plurality of classes on the basis of an input by a user and on the basis of an inspection of the at least one target robot and / or the at least one further robot by personnel.

2. The method according to claim 1, **characterised in that** the abnormal and / or detected state values comprise developments of one- or multidimensional state variables over time, in particular developments of electrical, thermal, kinematic and / or dynamic one- or multidimensional state variables over time, respectively of the at least one target robot or the at least one further robot, and / or statistical characteristic values thereof.

3. The method according to the preceding claim, **characterised in that** the developments over time comprise developments over time for reference movements of the same type and / or developments over time in regular working operations respectively of the at least one target robot or the at least one further robot.

4. The method according to any one of the preceding claims, **characterised in that** the determining of abnormal state values comprises:
- determining (S10) time intervals of abnormal state values of the at least one target robot and / or the at least one further robot on the basis of reference movements of the same type; and
- determining (S15) abnormal developments over time, respectively of the at least one target robot or the at least one further robot, in regular working operations on the basis of these time intervals.

5. The method according to any one of the preceding claims, **characterised in that**, on the basis of determined abnormal state values, a determination of further abnormal state values is instructed, which are classified into one of the classes and taken into account in the supervised machine learning.

6. The method according to any one of the preceding claims, **characterised in that** the inspection is instructed on the basis of determined abnormal state values.

7. The method according to any one of the preceding claims, **characterised in that** a maintenance interval and / or maintenance is adapted and / or instructed (S60) and / or a remaining service life is predicted on the basis of the predicted state of the at least one target robot.

8. A system which is set up for carrying out a method according to any one of the preceding claims and which comprises:
- means for determining abnormal state values of the target robot and / or at least one further robot;
- means for classifying the abnormal state values into one of a plurality of classes;
- means for supervised machine learning of an assignment between state values and the classes on the basis of the classified abnormal state values;
- means for detecting state values of the target robot; and
- means for predicting a state of the target robot on the basis of these detected state values and the assignment learned by machine learning,
wherein the means comprise a digital processing unit and one or more programs or program modules.

9. A computer program product comprising a program code which is stored on a computer-readable medium for carrying out a method according to any one of the preceding claims 1 to 7.

## Revendications

1. Procédé d'évaluation prédictive d'au moins un robot cible (1), avec les étapes :
- de détermination (S10 ; S15) de valeurs d'état anormales du robot cible et/ou d'au moins un autre robot, dans lequel la détermination de valeurs d'état anormales permet de déterminer de manière ciblée d'abord des valeurs d'état qui indiquent des erreurs de l'au moins un robot cible et/ou de l'autre robot ou résultent de telles erreurs ;
- de classement (S20) des valeurs d'état anormales dans une de plusieurs classes, dans lequel une classe est attribuée à chacun des groupes d'entraînement différents ;
- d'apprentissage par machine surveillé (S30) d'une attribution entre les valeurs d'état et les classes sur la base des valeurs d'état anormales classées ;
- d'acquisition (S40) de valeurs d'état du robot cible ; et
- de pronostic (S50) d'un état du robot cible sur la base de ces valeurs d'état acquises et de l'attribution apprise par machine,
dans lequel
- les valeurs d'état anormales sont déterminées à l'aide d'un algorithme de détection d'anomalie ; et
- les valeurs d'état anormales sont classées dans une des plusieurs classes sur la base d'une entrée utilisateur et sur la base d'une inspection par le personnel de l'au moins un robot cible et/ou de l'autre robot.

2. Procédé selon la revendication 1, **caractérisé en ce que** les valeurs d'état anormales et/ou acquises présentent des variations temporelles de grandeurs d'état thermiques, cinématiques et/ou dynamiques, en particulier électriques, unidimensionnelles ou multidimensionnelles de l'au moins un robot cible ou de l'autre robot et/ou des valeurs caractéristiques statistiques de ceux-ci.

3. Procédé selon la revendication précédente, **caractérisé en ce que** les variations temporelles présentent des variations temporelles lors de parcours de référence similaires et/ou en mode de travail régulier de l'au moins un robot cible ou de l'autre robot.

4. Procédé selon l'une quelconque des revendications précédentes, **caractérisé en ce que** la détermination de valeurs d'état anormales comprend :
- la détermination (S10) d'intervalles de temps de valeurs d'état anormales de l'au moins un robot cible et/ou de l'autre robot sur la base de parcours de référence similaires ; et
- la détermination (S15) de variations temporelles anormales de l'au moins un robot cible ou de l'autre robot en mode de travail régulier sur la base de ces intervalles de temps.

5. Procédé selon l'une quelconque des revendications précédentes, **caractérisé en ce que**, sur la base de valeurs d'état anormales déterminées, une détermination d'autres valeurs d'état anormales est ordonnée, qui sont classées dans une des classes et prises en compte lors de l'apprentissage par machine surveillé.

6. Procédé selon l'une quelconque des revendications précédentes, **caractérisé en ce que** l'inspection est ordonnée sur la base de valeurs d'état anormales déterminées.

7. Procédé selon l'une quelconque des revendications précédentes, **caractérisé en ce qu'**un intervalle de maintenance et/ou une maintenance est adapté(e) et/ou ordonné(e) (S60) et/ou une durée de vie restante est pronostiquée sur la base de l'état pronostiqué de l'au moins un robot cible.

8. Système, qui est configuré pour mettre en œuvre un procédé selon l'une quelconque des revendications précédentes et présente :
- des moyens pour déterminer des valeurs d'état anormales du robot cible et/ou d'au moins un autre robot ;
- des moyens pour classer les valeurs d'état anormales dans une de plusieurs classes ;
- des moyens pour apprendre par machine de manière surveillée une attribution entre les valeurs d'état et les classes sur la base des valeurs d'état anormales classées ;
- des moyens pour acquérir des valeurs d'état du robot cible ; et
- des moyens pour pronostiquer un état du robot cible sur la base de ces valeurs d'état acquises et de l'attribution apprise par machine,
dans lequel les moyens présentent une unité de traitement numérique et un ou plusieurs programmes ou modules de programme.

9. Produit-programme d'ordinateur avec un code de programme qui est stocké sur un support lisible par un ordinateur pour mettre en œuvre un procédé selon l'une quelconque des revendications 1 à 7 précédentes.
